Europäisches Patentamt

(19) European Patent Office

Office européen des brevets

(11) Publication number: **0 236 414 B1**

# (12) EUROPEAN PATENT SPECIFICATION

(45) Date of publication of patent specification:
**08.05.91 Bulletin 91/19**

(21) Application number: **86905372.8**

(22) Date of filing: **17.09.86**

(86) International application number:
**PCT/GB86/00551**

(87) International publication number:
**WO 87/01798 26.03.87 Gazette 87/07**

(51) Int. Cl.⁵: **G01B 7/00,** G05B 19/12,
B23Q 3/155

---

## (54) TOOL CHANGE APPARATUS.

Divisional application 90202139.3 filed on
17/09/86.

(30) Priority: **17.09.85 GB 8522984**

(43) Date of publication of application:
**16.09.87 Bulletin 87/38**

(45) Publication of the grant of the patent:
**08.05.91 Bulletin 91/19**

(84) Designated Contracting States:
**CH DE FR GB IT LI SE**

(56) References cited:
EP-A- 0 132 528
EP-A- 0 142 373
DE-A- 1 652 694

(56) References cited:
GB-A- 2 141 364
**The new Penguin dictionary of Electronics,
page 334**
**IEEE Standard dictionary of Electrical & Electronics terms, 2nd Edition, page 430**

(73) Proprietor: **Renishaw plc
New Mills
Wotton-Under-Edge Gloucestershire GL12
8JR (GB)**

(72) Inventor: **CHASE, James, Lancelot
Tyndale 17 Tabernacle Road
Wotton-Under-Edge
Gloucestershire GL12 7DR (GB)**

(74) Representative: **Jackson, John Timothy et al
Renishaw plc Patent Department New Mills
Wotton-under-Edge Gloucestershire GL12 8JR
(GB)**

Jouve, 18, rue Saint-Denis, 75001 PARIS

## Description

This invention relates to tool change apparatus, for example for changing the measuring tools used for inspection of workpieces on a co-ordinate measuring machine, or for a machine tool.

An example of such a tool change apparatus is shown in our international patent application published under the number WO85/02138. The apparatus exemplified by that application comprises a head for releasably supporting one of a plurality of tools. The tool may for example be a probe which generates a signal in response to contact with a workpiece. Such a signal is then transmitted via confronting electrical contacts on the tool and on the head to a computer (which may be part of the co-ordinate measuring machine or machine tool). Alternatively, GB-A-2141364 discloses infra-red signal transmission. In practice, an interface is commonly required to condition the signal before passing it to the computer, and/or also to provide appropriate power and possibly control signals to the tool.

A problem arises where more than one type of tool is to be connected to the head, if different tools have different requirements for signal conditioning, power supply and/or control signals. The appropriate requirements for the tool currently connected must be met, and for example a tool may be damaged if an incorrect power supply is inadvertently applied to it. It is known from DE-A-1652694 and from EP-A-0132528 to provide identification means on a cutting tool for a machine tool, which can be read to identify the tool, but such cutting tools do not suffer from the above problem and therefore these two documents neither address that problem nor provide a solution to it.

According to this invention we provide tool change apparatus comprising :

(a) a tool-holding head having means for releasably supporting (in operation) one of a plurality of tools, the tools to be supported each including a respective identification resistance means having a resistance value unique to the tool, and

(b) means for detecting the identity of a said tool, when supported by the head, from the resistance value of said resistance means of the tool, and for producing an output signal indicative of the identity.

An embodiment of the invention will be described by way of example with reference to the accompanying drawings, in which :

Fig 1 is a diagrammatic layout of a tool change apparatus,

Fig 2 in a more detailed schematic diagram of part of the apparatus,

Fig 3 is a flow chart explaining the operation of the apparatus, and

Fig 4 shows diagrammatically an extension bar for use with the apparatus

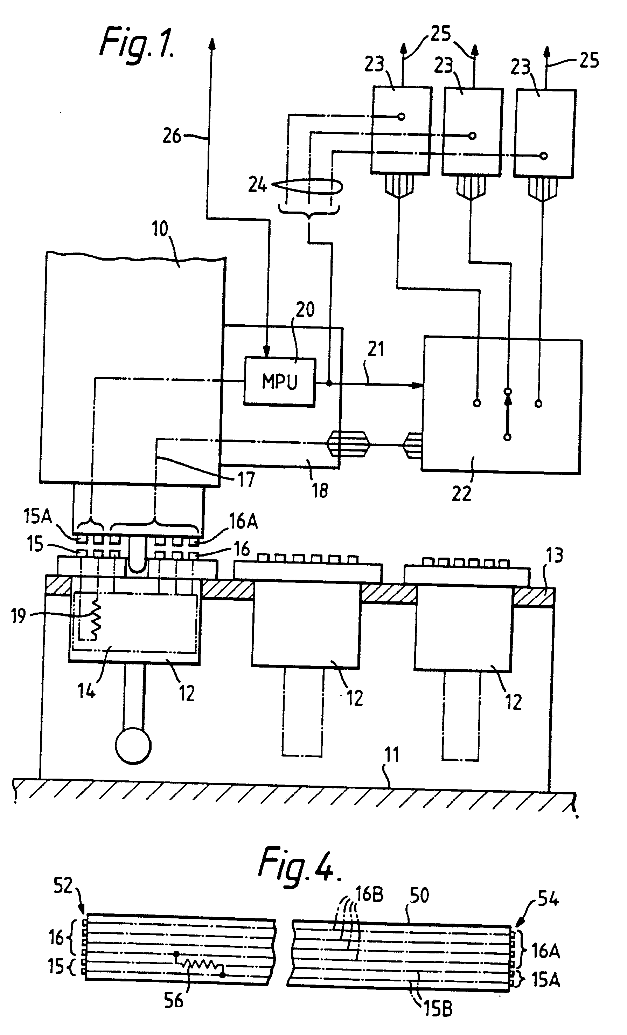

Referring to Fig 1, a co-ordinate measuring machine (known per se and not described in detail) has a head 10 movable relative to a table 11 on which a plurality of different tools 12 are arranged in respective storage locations of a support 13. The head 10 is adapted to be connected to any one of the tools 12 and to move the tool to a workpiece (not shown) for measuring or inspecting the workpiece all as known in general from our said International Patent Application.

The tools 12 may include a probe, known per se, for sensing contact with a workpiece and opening electrical contacts within the probe when the workpiece is touched. They may also include analogue probes for responding to contact with the workpiece, proximity probes, crack detecting probes, laser and other optical measuring probes, video cameras etc. enabling the co-ordinate measuring machine to be used as a very flexible inspection system for inspecting a wide variety of quality aspects of the workpiece.

Each tool 12 has an electric circuit 14 connected to a plurality of contacts 15, 16 co-operating with confronting contacts 15A, 16A on the head 10 to connect the tool circuit 14 to a signal conditioning unit ("SCU") 18 provided on the head 10. Certain contacts, 15, are used to enable the SCU to recognise the particular tool being connected to the head 10 while other contacts, 16, are used for transmitting an operational group of signals 17 to and from the tool.

For the purpose of said recognition, the tools 12 include respective resistors 19 of different resistance value connected to the contacts 15.

The SCU 18 of the present embodiment includes means (described below) for determining the resistance of the resistor of whatever tool 12 is connected to the head thereby to positively identify the tool. In this example a microprocessor system 20 (also described below) is used in the SCU for this purpose and is adapted to produce discrete identifying signals 21 for the respective tools 12. However, the same purpose could obviously be achieved by non-microprocessor circuitry if preferred.

Said other contacts 16 are connected through the SCU 18 to a multiplexer 22 for transmission of the operational signal groups from the tool 12 to a respective interface unit 23 where the operational signals are processed to appear at 25 in useful form for further processing by computer or for display e.g. in the form of printed characters. The interface 23 may also provide appropriate power and/or control signals to the respective tool 12 via the multiplexer.

The multiplexer 22 is operated by the SCU in response to the identifying signals 21 so that the operational group of signals 17 of any one tool 12 identified by the SCU 18 is connected by the multiplexer 22 to the appropriate interface unit 23. The SCU 18 is also adapted to produce signals 24 responsive to the respective signals 21 and connected to the respective interface units 23 to initiate the processing of the operational signals 17 connected thereto by the multiplexer. Such processing may include the digitisation of analogue values. The SCU itself may include amplifiers for amplifying any such analogue values prior to onward transmission. Furthermore, the microprocessor 20 is in communication via a channel 26 with a host computer of the co-ordinate measuring machine, which has overall control of the machine and governs the picking up, use and setting down of the tools 12 by the head 10.

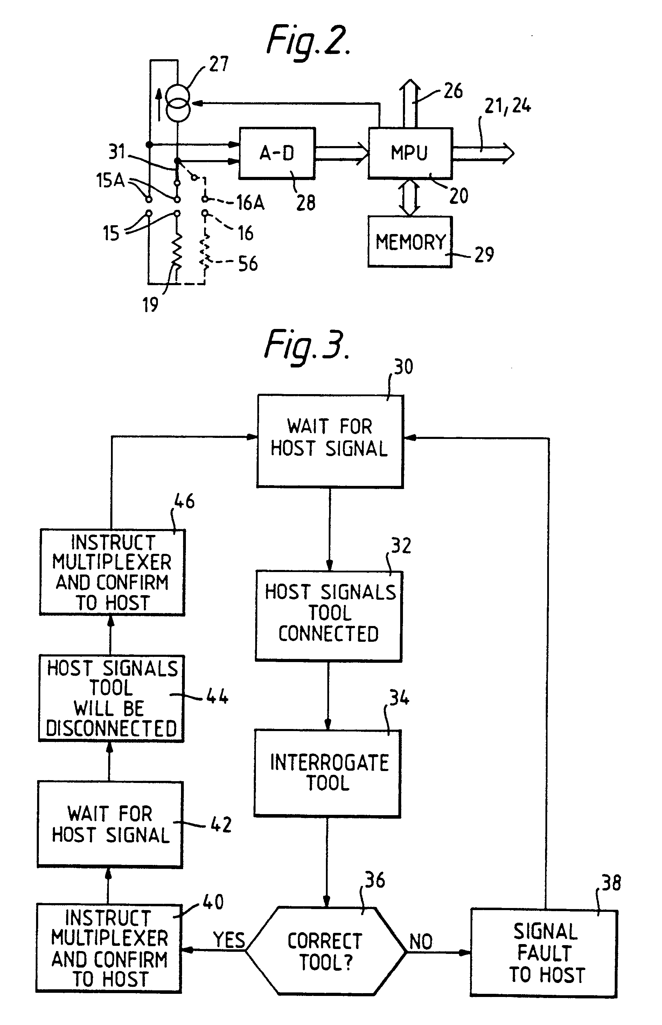

Fig 2 shows more detail of part of the SCU 18, and Fig 3 shows the sequence of operations performed by the microprocessor 20. At step 30 in Fig 3, the microprocessor is waiting for a signal from the host computer. At 32, a signal is received from the host via the communication channel 26, advising the microprocessor that the host has caused the head 10 to pick up a tool 12 from a given location on the support 13 (in the manner described in the above-mentioned international patent application). The signal includes a code for identifying the tool concerned. On receipt of this signal, at step 34, the microprocessor interrogates the tool 12 which has been picked up. It does this by switching on a constant current source 27 within the SCU, to pass a known constant current through the resistor 19 of the tool via the contacts 15, 15A. It then receives an input value from an analogue-to-digital converter 28, indicating the voltage developed across the resistor 19 by the constant current. This input value, of course, is unique to the tool picked up. Having received the value, the current source 27 is switched off.

Next, at step 36, the microprocessor 20 takes the tool identification code received from the host at step 32 and addresses a table stored in its memory 29. From the table, it obtains a corresponding voltage value, being the value expected to be produced in the converter 28 by the tool which the host intended to be picked up. The microprocessor decides whether the correct tool has in fact been picked up by comparing this expected value with the value actually received in step 34. If the values do not agree (to within a specified tolerance) the microprocessor proceeds to step 38, where it signals a fault condition to the host. The host may then halt operation of the machine, or possibly it may attempt to correct the fault. Such a fault may occur for example, if the machine operator has placed the wrong tool in the chosen location of the support 13, or if the tool has not been successfully picked up for some reason. Signalling the fault in this way prevents the host from continuing its cycle with the wrong tool and possibly causing collision damage between the tool and the workpiece.

Assuming that the correct tool is identified, then the microprocessor sends the signal 21 to the multiplexer 22 to connect the corresponding interface 23 to the tool 12 (setp 40). The signal 24 is also sent to the appropriate interface to activate it. Prior to this time, no interface at all has been connected to the tool. This is important in order to ensure that the tool is not inadvertently connected to an incorrect power supply which could damage it. Having instructed the multiplexer and corresponding interface, the microprocessor confirms this fact to the host.

After this step, the microprocessor then simply waits for a further signal from the host (step 42), during which time the host is controlling a measurement or inspection operation on the workpiece, using the selected tool 12. When this is completed on returning the tool to its storage location on the support 13 and immediately prior to disconnection of the tool from the head 10, the host again signals the microprocessor 20 (step 44). The microprocessor then issues a signal 24 to disable the selected interface 23, and a signal 21 to cause the multiplexer 22 to disconnect the interface from the contacts 16A (step 46). Having done so, it confirms this fact to the host which will proceed to disconnect the tool from the head. The microprocessor can now return directly to step 30 to repeat the whole process for the next selected tool.

Fig. 4 illustrates a further type of tool, one or more of which may be present in the support 13. This is an extension bar tool 50 which can be used as an accessory in conjunction with any one of the measuring tools 12. One end 52 of the bar is provided with mechanical and electrical connections identical with the tools 12, in order that it can be picked up by the head 10 (though the mechanical connections are not shown in the figure). The other end 54 has mechanical and electrical connections identical with the head 10, so that once the bar has been picked up by the head, it can then in turn pick up either a selected tool or another extension bar 50. The use of an extension bar is known per se, and enable the measuring tool 12 to inspect regions of the workpiece which would otherwise be inacessible, e.g. the internal surfaces of a bore. Often, to provide the greatest flexibility, several extension bars 50 of differing lengths will be stored in the support 13.

To permit identification of the tools 12 in exactly the same manner as above, and to allow for transmission of signals and power to and from the tool, a series of parallel electrical lines 15B, 16B run the length of the extension bar 50, connecting the contacts 15, 16 at the end 52 with the respective contacts 15A, 16A at the end 54. Additionally, it is desirable to be able to identify the extension bar or combination of bars which has been connected. To this end, each bar is provided with a unique-valued resistor 56 connected between one of the lines 15B and one of the lines 16B. The microprocessor 20 controls a switch 31 to connect the constant current source 27 and analogue-to-digital converter 28 across the corresponding contacts 15A, 16A. The identifying resistor 56 is interrogated in exactly the same way as described above for the resistor 19. If two or more extension bars 50 are connected in series, their resistors will appear in parallel to decrease the voltage measured by the analogue-to-digital converter. The combination of bars can be uniquely identified if the respective resistance values are suitable chosen : for example, so that the conductance of each bar is proportional to its length, or is in a binary sequence such as 100µS, 200µS, 400µS, 800µS etc.

The resistor 56 is connected between a line 15B and a line 16B, rather than across the two lines 15B, in order to facilitate identification of the measurement tools 12 separately from the extension bar tools 50. Since this reduces the number of the electrical connections 16, 16A which are available for signal and power purposes, and since it is likely that the number of pins available for these purposes will be limited, it may be desirable to use the two connections 15, 15A for both identification functions. This can be done if the extensions bars (for example) are each identified with a unique capacitance value instead of a unique resistance value ; but this leads to an excessively complicated arrangement and is not preferred.

The tool change apparatus described is particularly useful with measuring and inspection tools on co-ordinate measuring machines, and can also be used with measuring and inspection tools on an automatic machine tool. It enables the correct interface to be selected and prevents electrical and mechanical damage being caused if the wrong tool is picked up. However, it is also useful for confirming the identity of tools not themselves intended for measurement or inspection, including the accessory extension bars already discussed, and even (if desired) the cutting tools of a machine tool, provided an appropriate resistor for identification can be applied to them.

**Claims**

1. Tool change apparatus comprising :
(a) a tool-holding head (10) having means for releasably supporting (in operation) one of a plurality of tools (12 ; 50), the tools to be supported each including a respective identification resistor (19 ; 56) having a resistance value unique to the tool, and
(b) means (20, 27, 28) for detecting the identity of a said tool, when supported by the head, from the resistance value of said resistor of the tool, and for producing an output signal (21 ; 24) indicative of the identity.

2. Apparatus according to claim 1 in which the detecting means includes a constant current source (27) for connection to the resistor (19 ; 56) and means (28) for measuring the voltage developed across the resistor by the constant current to produce said value.

3. Apparatus according to claim 1 or claim 2, for use with tools (12 ; 50) which each include means (14; 16B) for transmitting a signal to the apparatus, the apparatus further comprising :
(c) a plurality of processing circuits (23) for processing said signals transmitted by respective said tools when supported by the apparatus, and
(d) a multiplexer (22, 24), acted upon by said output signal indicative of the identity, for selecting one of said processing circuits (23) corresponding to the identified tool, and for causing the selected circuit to receive the signal transmitted by said tool.

4. Apparatus according to any one of the preceding claims for use with tools (12 ; 50) which each include means (14 ; 16B) for transmitting a signal to the apparatus, the apparatus including a plurality of processing circuits (23) for processing said signals transmitted by respective said tools when supported by the apparatus, and wherein the apparatus sends a signal (24) to activate a processing circuit (23) corresponding to a tool identified by the detecting means (20, 27, 28).

5. Apparatus according to claim 3 or claim 4, in which said means for detecting the identity of a tool includes means (20) for receiving from a host computer a code representing an expected tool identity, for comparing the received code with the detected tool identity, and for causing selection/activation of a said processing circuit (23) only if the detected identity agrees with the received code.

6. Apparatus according to any one of the preceding claims, in combination with at least one said tool (12 ; 50).

7. Apparatus according to claim 6, in which the tool is a measuring tool (12).

8. Apparatus according to claim 6, in which the tool is an extension bar (50) having means for releasably supporting a further tool (12 ; 50).

9. Apparatus according to claim 8, in which the extension bar (50) has a plurality of electrical lines (15B, 16B) running in a parallel arrangement from electrical connections (15, 16) at one end of the bar to corresponding electrical connections (15A, 16A) at the other end of the bar, thereby to connect the head (10) to a said further tool in operation, and including said identification means in the form of a resistor (56) connected between two of said lines.

10. A tool (12 ; 50) for a coordinate measuring machine or a machine tool, which can be changed by the tool change apparatus of claim 1 having an electric circuit (14 ; 16B) for producing or transmitting signals, a plurality of electrical contacts (15, 16) for cooperating with confronting contacts on a head of the machine, some of said contacts (16) being connected to said electrical circuit (14 ; 16B) for transmitting said signals, and characterised by a resistor (19 ; 56) connected to other said contacts (15 ; 15, 16).

11. A tool according to claim 10, wherein said tool is a measuring tool (12).

12. A tool according to claim 10, wherein said tool is an extension bar (50) having means for releasably supporting a further tool (12 ; 50).

13. A tool according to claim 10, claim 11 or claim 12, in combination with a signal conditioning unit (18) connected to said confronting contacts on the head of the machine, the signal conditioning unit including resistance determining means (20, 27, 28) for connection to said resistor (19 ; 56).


**Ansprüche**

1. Werkzeugwechselvorrichtung, welche umfaßt:
(a) einen Werkzeughaltekopf (10) mit Mitteln zum lösbaren Abstützen (im Betrieb) eines von einer Vielzahl von Werkzeugen (12 ; 50), wobei die abzustützenden Werkzeuge jeweils einen jeweiligen Identifizierungswiderstand (19 ; 56) mit einem für das Werkzeug eindeutigen Widerstandswert enthalten ; und
(b) Mittel (20, 27, 28) zum Erfassen der Identität des Werkzeugs, wenn es durch den Kopf gestützt wird, aus dem Widerstandswert des Werkzeug-Widerstands und zum Erzeugen eines für die Identität bezeichnenden Ausgangssignals (21 ; 24).

2. Vorrichtung nach Anspruch 1, bei der das Erfassungsmittel eine Konstantstromquelle (27) zur Verbindung mit dem Widerstand (19 ; 56) enthält und Mittel (28) zum Messen der über dem Widerstand durch den Konstantstrom entwickelten Spannung zum Erzeugen des Wertes.

3. Vorrichtung nach Anspruch 1 oder 2 zur Verwendung mit Werkzeugen (12 ; 50), welche Mittel (14 ; 16B) zum Aussenden eines Signals zu der Vorrichtung enthalten, wobei die Vorrichtung weiter umfaßt :
(c) eine Vielzahl von Bearbeitungskreisen (23) zum Bearbeiten der durch die jeweiligen Werkzeuge gesendeten Signale, wenn sie durch die Vorrichtung gestützt sind, und
(d) einen Multiplexer (22, 24), auf den durch das für die Identität bezeichnende Ausgangssignal eingewirkt wird zum Auswählen eines der Bearbeitungskreise (23) entsprechend dem identifizierten Werkzeug, und um den ausgewählten Kreis das durch das Werkzeug ausgesendete Signal empfangen zu lassen.

4. Vorrichtung nach einem der vorangehenden Ansprüche zum Einsatz mit Werkzeugen (12 ; 50), welche jeweils Mittel (14 ; 16B) zum Aussenden eines Signals zu der Vorrichtung enthalten, wobei die Vorrichtung enthält eine Vielzahl von Bearbeitungskreisen (23) zum Bearbeiten der durch die jeweiligen Werkzeuge, wenn sie durch die Vorrichtung abgestützt werden, ausgesendeten Signale, und wobei die Vorrichtung ein Signal (24) zum Aktivieren eines Bearbeitungskreises (23) sendet, der einem durch das Erfassungsmittel (20, 27, 28) identifizierten Werkzeug entspricht.

5. Vorrichtung nach Anspruch 3 oder 4, bei der das Mittel zum Erfassen der Identität eines Werkzeugs Mittel (20) enthält zum Empfangen eines Kodes von einem Hilfscomputer, der eine erwartete Werkzeug-Identität darstellt, zum Vergleichen des empfangenen Kodes mit der erfaßten Werkzeug-Identität und zum Veranlassen einer Auswahl/Aktivierung des Bearbeitungskreises (23) nur dann, wenn die erfaßte Identität mit dem empfangenen Kode übereinstimmt.

6. Vorrichtung nach einem der vorangehenden Ansprüche in Kombination mit mindestens einem solchen Werkzeug (12 ; 50).

7. Vorrichtung nach Anspruch 6, bei der das Werkzeug ein Meßwerkzeug (12) ist.

8. Vorrichtung nach Anspruch 6, bei der das Werkzeug ein Verlängerungsstab (50) mit Mitteln zum lösbaren Abstützen eines weiteren Werkzeugs (12 ; 50) ist.

9. Vorrichtung nach Anspruch 8, bei der der Verlängerungsstab (50) eine Vielzahl von elektrischen Leitungen (15B, 16B) besitzt, die in paralleler Anordnung von elektrischen Verbindungen (15, 16) an einem Ende des Stabes zu entsprechenden elektrischen Verbindungen (15A, 16A) am anderen Ende des Stabes laufen, um dadurch den Kopf (10) mit dem weiteren Werkzeug im Betrieb zu verbinden, und die das Identifizierungsmittel in Form eines zwischen zwei Leitungen angeschlossenen Widerstands (56) enthalten.

10. Werkzeug (12 ; 50) für eine Koordinatenmeßmaschine oder eine Werkzeugmaschine, bei der durch die Werkzeug-Wechselvorrichtung nach Anspruch 1 gewechselt werden kann, mit einem elektrischen Kreis (14 ; 16B) zum Erzeugen oder Senden von Signalen ; einer Vielzahl von elektrischen Kontakten (15, 16) zum Zusammenwirken mit gegenüberliegenden Kontakten an einem Kopf der Maschine, wobei einige Kontakte (16) mit dem elektrischen Kreis (14 ; 16B) zum Senden der Signale verbunden sind, und gekennzeichnet durch einen mit den anderen solchen Kontakten (15 ; 15, 16) verbundenen Widerstand (19 ; 56).

11. Werkzeug nach Anspruch 10, wobei das Werkzeug ein Meßwerkzeug (12) ist.

12. Werkzeug nach Anspruch 10, wobei das Werkzeug ein Verlängerungsstab (50) mit Mitteln zum lösbaren Abstützen eines weiteren Werkzeugs (12 ; 50) ist.

13. Werkzeug nach Anspruch 10, 11 oder 12 in Kombination mit einer Signalaufbereitungs-Einheit (18), die an den gegenüberliegenden Kontakten am Kopf der Maschine angeschlossen ist, wobei die Signalaufbereitungs-Einheit     Widerstands-Bestimmungsmittel (20, 27, 28) zur Verbindung mit dem Widerstand (19 ; 56) enthält.

## Revendications

1. Appareil de changement d'outil caractérisé en ce qu'il comporte :

(a) une tête porte-outils (10) possédant un moyen pour supporter (en fonctionnement), de manière à pouvoir également le relâcher, un outil parmi une pluralité d'outils (12 ; 50), les outils devant être supportés comprenant chacun une résistance d'identification respective (19 ; 56) ayant une valeur de résistance propre à l'outil, et

(b) un moyen (20, 27, 28) de détection de l'identité de l'un desdits outils, lorsqu'il est supporté par la tête, à partir de la valeur de résistance de ladite résistance de l'outil, et de production d'un signal de sortie (21 ; 24) indiquant l'identité.

2. Appareil selon la revendication 1, caractérisé en ce que le moyen de détection comprend une source de courant constant (27) pour la connexion à la résistance (19 ; 56) et un moyen (28) mesurer la tension développée à travers la résistance par le courant constant pour produire ladite valeur.

3. Appareil selon la revendication 1 ou la revendication 2, prévu pour être utilisé avec des outils (12; 50) qui comprennent chacun un moyen (14 ; 16B) pour transmettre un signal à l'appareil, caractérisé en ce qu'il comporte en outre :

(c) une pluralité de circuits de traitement (23) pour traiter lesdits signaux transmis par lesdits outils respectifs lorsqu'ils sont portés par l'appareil, et

(d) un multiplexeur (22, 24), subissant l'action dudit signal de sortie indiquant l'identité, pour sélectionner l'un desdits circuits de traitement (23) correspondant à l'outil identifié, et pour faire en sorte que le circuit sélectionné reçoive le signal transmis par ledit outil.

4. Appareil selon l'une quelconque des revendications précédentes pour utilisation avec des outils qui comprennent chacun un moyen (14 ; 16B) pour transmettre un signal à l'appareil, l'appareil comprenant une pluralité de circuits de traitement (23) pour traiter lesdits signaux transmis par lesdits outils respectifs lorsqu'ils sont supportés par l'appareil, et caractérisé en ce que l'appareil émet un signal (24) pour activer un circuit de traitement (23) correspondant à un outil identifié par le moyen de détection (20, 27, 28).

5. Appareil selon la revendication 3 ou la revendication 4, caractérisé en ce que ledit moyen de détection de l'identité d'un outil comprend un moyen (20) pour recevoir d'un ordinateur central un code représentant une identité d'outil attendue, pour comparer le code reçu avec l'identité d'outil détectée, et pour provoquer la sélection/activation dudit circuit de traitement (23) seulement si l'identité détectée correspond au code reçu.

6. Appareil selon l'une quelconque des revendications précédentes, caractérisé en ce qu'il est combiné avec au moins un desdits outils (12 ; 50).

7. Appareil selon la revendication 6, caractérisé en ce que l'outil est un outil de mesure (12).

8. Appareil selon la revendication 6, caractérisé en ce que l'outil est une barre d'allongement (50) possédant un moyen pour supporter un autre outil (12 ; 50) de manière à pouvoir le relâcher.

9. Appareil selon la revendication 8, caractérisé en ce que la barre d'allongement (50) possède une pluralité de lignes électriques (15B, 16B) s'étendant dans une disposition parallèle de connexions électriques (15,16) à une extrémité de la barre vers des connexions électriques correspondantes (15A, 16A) à l'autre extrémité de la barre, pour connecter ainsi la tête (10) audit autre outil en fonctionnement, et comprenant ledit moyen d'identification sous la forme d'une résistance (56) connectée entre deux desdites lignes.

10. Outil (12 ; 50) pour une machine de mesure à coordonnées ou une machine-outil qui peut être changée par l'appareil de changement d'outil de la revendication 1, possédant un circuit électrique (14 ; 16B) pour la production ou la transmission de signaux ; une pluralité de contacts électriques (15, 16) pour un fonctionnement conjoint avec des contacts en regard sur une tête de la machine, certains desdits contacts (16) étant connectés audit circuit électrique (14 ; 16B) pour la transmission desdits signaux ; et caractérisé en ce qu'il possède une résistance (19 ; 56) connectée auxdits autres contacts (15; 15, 16).

11. Outil selon la revendication 10, caractérisé en ce que ledit outil est un outil de mesure (12).

12. Outil selon la revendication 10, caractérisé en ce que ledit outil est une barre d'allongement (50) possédant un moyen pour supporter un autre outil (12 ; 50) de manière à pouvoir le relâcher.

13. Outil selon la revendication 10, la revendication 11 ou la revendication 12, caractérisé en ce qu'il est combiné avec une unité de prétraitement des signaux (18) connectée auxdits contacts en regard sur la tête de la machine, ladite unité de prétraitement des signaux comprenant un moyen pour déterminer la résistance (20, 27, 28) pour la connection à ladite résistance (19 ; 56).

Fig.1.

Fig.4.

# Fig.2.

# Fig.3.